(19) Europäisches Patentamt
European Patent Office
Office européen des brevets

(11) **EP 1 492 955 B1**

(12) **EUROPÄISCHE PATENTSCHRIFT**

(45) Veröffentlichungstag und Bekanntmachung des Hinweises auf die Patenterteilung:
**02.11.2011 Patentblatt 2011/44**

(21) Anmeldenummer: **03709793.8**

(22) Anmeldetag: **18.03.2003**

(51) Int Cl.:
*F03B 13/08* (2006.01)    *F03B 13/10* (2006.01)

(86) Internationale Anmeldenummer:
**PCT/EP2003/002777**

(87) Internationale Veröffentlichungsnummer:
**WO 2003/085255 (16.10.2003 Gazette 2003/42)**

(54) **TURBINE MIT EINEM STROMABWÄRTS ANSCHLIESENDEN ROHR**

TURBINE WITH A DOWNSTREAM TUBE

TURBINE COMPORTANT UN TUYAU CONNECTE EN AVAL

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **10.04.2002 AT 5492002**

(43) Veröffentlichungstag der Anmeldung:
**05.01.2005 Patentblatt 2005/01**

(73) Patentinhaber: **Andritz Hydro GmbH**
**1141 Wien (AT)**

(72) Erfinder: **NICHTAWITZ, Alois**
**A-4050 Traun (AT)**

(74) Vertreter: **Schweinzer, Friedrich et al**
**Andritz AG**
**Stattegger Strasse 18**
**8045 Graz (AT)**

(56) Entgegenhaltungen:
GB-A- 810 405    US-A- 1 681 706
US-A- 2 060 101    US-A- 4 441 029
US-B1- 6 281 597

**Beschreibung**

Die gegenständliche Erfindung betrifft eine Turbine bzw. eine Turbinen-Generatoreinheit mit einem stromabwärts an die Turbine anschließenden Rohr für einen Betrieb mit niedrigem oder keinem Flüssigkeitspegel stromab der Turbine, sowie einem Turbinen-Generatormodul bestehend aus einer Anzahl solcher Turbinen-Generatoreinheiten. Eine solche Turbine ist beispielsweise aus der US-A-2060 101 bekannt. Weiters wird die Verwendung einer solchen Turbine bzw. Turbinen-Generatoreinheit und ein Verfahren zum Betreiben einer mit Flüssigkeit durchströmbaren Turbine bzw. Turbinen-Generatoreinheit, ein Verfahren zum Betreiben einer Anlage zur Erzeugung elektrischer Energie, ein Verfahren zum Umbau einer Struktur zum Zurückhalten eines flüssigen Mediums in eine Einrichtung zur Erzeugung elektrischer Energie und ein Verfahren zum Erzeugen elektrischer Energie an einer Struktur zum Zurückhalten eines flüssigen Mediums beansprucht.

Ein Rohr, meistens ein Saugrohr, einer Turbine bzw. Turbinen-Generatoreinheit muss in der Praxis immer in das Unterwasser münden und darf niemals ins Freie spritzen, da sich dann, vor allem bei Saugrohren mit großer Divergenz, der Austrittstrahl vom Saugrohr ablösen kann, was den hydraulischen Wirkungsgrad und damit auch den Anlagenwirkungsgrad einer solchen Turbinen-Generatoreinheit erheblich auf einen wirtschaftlich unakzeptablen Wert reduziert. Aus diesem Grund wird danach getrachtet eine solche Situation in der Praxis zu vermeiden.

Aus konstruktiven Gründen, und hier vor allem bei der Verwendung von bereits bestehenden Dammstrukturen, ist es manchmal jedoch nicht möglich, diese Bedingung zu erfüllen, da der Unterwasserspiegel von Haus aus zu nieder ist. In eine solche Anlage konnte daher bislang keine effiziente Turbine bzw. Turbinen-Generatoreinheit zur Erzeugung elektrischer Energie eingebaut werden.

Die Aufgabe der vorliegenden Erfindung ist es daher, eine Turbine bzw. Turbinen-Generatoreinheit anzugeben, die auch dann mit hohem hydraulischen Wirkungsgrad betrieben werden können, wenn dessen stromab anschließendes Rohr nicht oder nur teilweise in das Unterwasser mündet und die trotzdem sehr günstig und konstruktiv einfach gebaut werden kann.

Diese Aufgabe wird erfindungsgemäß dadurch gelöst, dass ein Mittel vorgesehen ist, mit welchem ein Abreißen der Strömung vom Rohr zumindest teilweise verhinderbar ist.

Durch ein solches Mittel wird das Abreißen der Strömung im an die Turbine anschließenden Rohr der Turbine bzw. der Turbinen-Generatoreinheit und damit ein Einbruch des hydraulischen Wirkungsgrades verhindert. Der Anlagenwirkungsgrad, der sich aus dem mechanischen, im Wesentlichen gegeben durch Reibungsverluste der Lager, dem hydraulischen, im Wesentlichen gegeben durch die Effizienz der Turbine, und dem elektrischen Wirkungsgrad des Generators zusammensetzt, kann dadurch ebenfalls hoch gehalten werden, was aus Wirtschaftlichkeitsaspekten heraus äußerst wichtig ist.

Somit kann eine solche Turbine bzw. Turbinen-Generatoreinheiten auch dann eingesetzt werden, wenn es z.B. aus konstruktiven Gründen nicht möglich ist, das Rohr vollständig in das Unterwasser münden zu lassen, was bisher gefordert war. Dadurch wird es möglich, auch bereits bestehende, Stauanlagen mit niedrigem oder keinem Flüssigkeitspegel stromab der Turbine mit Turbinen-Generatoreinheiten zur Erzeugung von elektrischer Energie nachzurüsten, ohne die Stauanlage selbst konstruktiv zu verändern.

Das erfindungsgemäße Konzept lässt sich ganz besonders vorteilhaft bei Turbinen mit Saugrohren einsetzen, da in der Regel in der Praxis meistens aus Wirkungsgradgründen als Rohr ein Saugrohr verwendet wird und dort der Effekt des Abreißens der Strömung durch das divergierende Saugrohr, insbesondere bei stark divergierenden Saugrohren, besonders oft zu Problemen führt.

Aus Platzgründen ist es oftmals günstig die Turbine mit im Wesentlichen horizontalen oder mit gegenüber dieser Horizontalen geneigten Rotationsachsen auszuführen, wobei die Turbine in vorteilhafter Weise einen Turbinenläufer aufweist, auf dem eine Mehrzahl von Turbinenschaufeln angeordnet sind, die am Turbinenläufer starr angeordnet sind, wodurch sich eine besonders einfach umzusetzende Anordnung ergibt.

Ein sehr einfaches und gleichzeitig sehr effektives Mittel zum Verhindern des Abreißens der Flüssigkeitsströmung ist ein Strömungskörper. Ein solcher Strömungskörper ist einfach herzustellen und konstruktiv sehr einfach handhabbar.

Wobei die Effektivität des Strömungskörpers erhöht werden kann, wenn dieser im Rohr, vorzugsweise im Bereich des stromabwärtsliegenden Endes des Rohres, angeordnete ist. Das Phänomen des Abreißens der Strömung beginnt meistens am Ende des Rohres, weshalb der Strömungskörper vorteilhafter Weise auch dort eingesetzt wird.

Eine ganz besonders einfache Ausführungsform, ohne an Effektivität einzubüßen, ergibt sich, wenn der Strömungskörper als zumindest eine Rippe ausgebildet ist, die im Wesentlichen horizontal, vertikal oder aber auch beliebig geneigt angeordnet sein kann. Eine Rippe, also im Prinzip ein einfaches Blechstück, kann besonders einfach und günstig hergestellt und eingebaut werden.

Im Falle das mehrere Rippen eingesetzt werden kann der Abstand zwischen zwei Rippen im Wesentlichen nach der Formel $v \geq \sqrt{g \cdot h}$ ,mit v der Strömungsgeschwindigkeit, g der Erdbeschleunigung und h dem Abstand zwischen zwei Rippen, berechnet werden. Damit erhält man gleichfalls eine einfache Methode die erforderliche Anzahl der Rippen vorab zu bestimmen.

Um die Effektivität des Strömungskörpers noch weiter zu erhöhen ist es auch denkbar, eine Rippe gegenüber der Strömung geneigt anzuordnen, womit in einem Teil des Saugrohres ein lokaler Düseneffekt entsteht, der das Abreißen der Strömung wesentlich erschwert.

Eine weitere sehr vorteilhafte Ausführungsform eines Strömungskörpers ist ein im Rohr konzentrisch angeordneter, birnenförmiger Körper, der durch eine Anzahl von Stützschaufeln im Rohr gehalten wird. Ein solcher Körper ist ebenfalls einfach herzustellen, günstig und konstruktiv einfach handhabbar.

Am konstruktiv einfachsten und daher sehr vorteilhaft ist eine Anordnung, bei der das Rohr in Betriebsposition im nicht durchströmten Zustand zumindest teilweise ins Freie mündet und somit keine aufwendigen Verkleidungen oder ähnliche Konstruktionen erforderlich sind.

Der Vorteil einer erfindungsgemäßen Turbine wird besonders deutlich bei Anlagen, wo das Rohr im nicht durchströmten Zustand in seiner Betriebsposition bezogen auf den Unterwasserpegel zur Gänze ins Freie ragt, wobei auch Zwischenbereiche von 25%-iger, 50%-iger oder 75%-iger Überdeckung denkbar sind. Solche Stauanlagen können nun erstmals ohne Einschränkung im hydraulischen Wirkungsgrad zur Erzeugung von elektrischer Energie verwendet werden.

Eine erfindungsgemäße Turbine bzw. Turbinen-Generatoreinheit wird vorteilhafter Weise in einem Turbinen-Generatormodul, bestehend aus einer Mehrzahl von nebeneinander und/oder übereinander angeordneten, miteinander verbundenen Turbinen-Generatoreinheiten für einen Betrieb mit niedrigem oder keinem Flüssigkeitspegel stromab der Turbinen-Generatoreinheit verwendet, wobei in einer besonderen Ausführungsvariante die Rohre der in einer Reihe nebeneinander angeordneten Turbinen-Generatoreinheiten zumindest teilweise ins Freie münden und das Mittel zum Verhindern des Abreißens der Strömung an allen Rohren dieser Reihe wirkt.

Aus konstruktiven Gründen und/oder Kostengründen ist es auch denkbar, ein einziges Rohr für eine Anzahl von Turbinen-Generatoreinheit des Turbinen-Generatormodul vorzusehen. Das Turbinen-Generatormodul kann somit unter Umständen kompakter, leichter und konstruktiv einfacher gebaut werden.

Ganz besonders vorteilhaft lässt sich eine erfindungsgemäße Turbine, Turbinen-Generatoreinheit bzw. Turbinen-Generatormodul in einer zumindest teilweise bereits bestehenden Stauanlage mit niedrigem oder fehlendem Unterwasserpegel verwenden, da dann keine oder nur unwesentlichen konstruktive Änderungen an der Stauanlage vorgenommen werden müssen, um einsetzbar zu sein.

Das Turbinen-Generatormodul wird dabei besonders günstig zur Erzeugung von elektrischer Energie zwischen zwei ortsfesten Strukturen der Stauanlage betrieben, womit die bestehenden Strukturen optimal ausgenutzt werden können.

Durch das erfindungsgemäße Konzept der Aufrechterhaltung der Strömung im Rohr der Turbine kann eine solche Turbine betrieben werden, indem die Strömung der Flüssigkeit stromabwärts unmittelbar hinter dem Rohr zumindest abschnittsweise über dem Unterwasserpegel aufrechterhalten wird, sodass der zur Energieerzeugung erforderliche hydraulische Wirkungsgrad der Turbine erzielt wird, wobei die Strömung in einem sehr weiten Bereich von 10%, 50%, 100%, 300% und sogar mehr als 500% über dem Flüssigkeitspegel aufrechterhalten werden kann.

Eine erfindungsgemäße Turbinen-Generatoreinheit bzw. eine Anlage zur Erzeugung elektrischer Energie mit zumindest einer Turbinen-Generatoreinheit bzw. zumindest einem Turbinen-Generatormodul kann erstmals auch dann besonders günstig ohne Verlust an Wirkungsgrad betrieben werden, wenn der Flüssigkeitspegel stromab in einem Abstand hinter dem Rohr in einem Bereich von unterhalb der Unterkante des Rohres bis maximal unmittelbar unterhalb der Oberkante des Rohres gehalten wird und wobei ein Abreißen der Strömung im Rohr zumindest teilweise verhindert wird.

Mit einer erfindungsgemäßen Turbine, Turbinen-Generatoreinheit bzw. Turbinen-Generatormoduls lässt sich erstmals eine Struktur zum Zurückhalten eines flüssigen Mediums besonders einfach, vorteilhaft und ohne Wirkungsgradeinbußen in eine Einrichtung zur Erzeugung elektrischer Energie umbauen, indem der Pegel des Mediums hinter der Struktur und der Pegel des Mediums vor der Struktur, welcher über dem Pegel des Mediums hinter der Struktur liegt ermittelt werden, zumindest ein Turbinen-Generatormodul hergestellt wird, wobei die Bauweise und der Wirkungsgrad der Turbinen und/oder Generatoren auf die ermittelten Pegel abgestimmt sind und zumindest abschnittsweise die Strömung des Mediums stromabwärts unmittelbar hinter dem Rohr über dem Pegel des Mediums hinter der Struktur aufrechterhalten wird, indem ein Abreißen der Strömung vom Rohr zumindest teilweise verhindert wird, sodass der zur Energieerzeugung erforderliche hydraulische Wirkungsgrad der Turbine erzielt wird.

Gleiches gilt für ein Verfahren zum Erzeugen elektrischer Energie an einer Struktur zum Zurückhalten eines flüssigen Mediums, wobei das Medium hinter der Struktur einen niedrigen oder keinen Pegel aufweist.

Die Erfindung wird nun im Folgenden anhand der beispielhaften, nicht einschränkenden Figuren 1 bis 7, die spezielle Ausführungsbeispiele zeigen, beschrieben. Dabei zeigen

Fig. 1 - 4 jeweils eine Auf- und Seitenansicht einer Turbinen-Generatoreinheit mit Saugrohr in verschiedenen Ausführungsvarianten,
Fig. 5 eine beispielhafte Stauanlage mit einem Turbinen-Generatormodul,
Fig. 6 eine Ausführungsvariante mit einem externen Strömungskörper und

Fig. 7 eine Ausführungsvariante ohne eigenständiges Rohr.

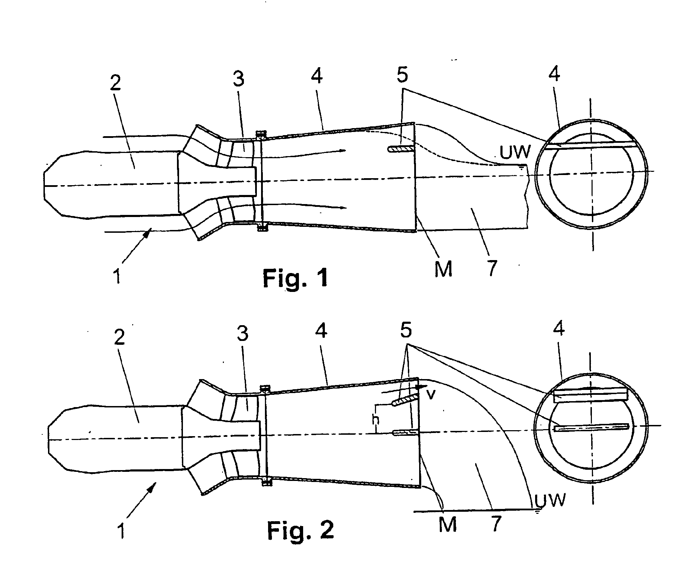

In Fig. 1 ist eine Turbinen-Generatoreinheit 1 in Betriebsposition, mit einem Generator 2 und einer Turbine 3, die den Generator 2 antreibt, gezeigt. Die Strömung durch die Turbinen-Generatoreinheit 1 wird dabei durch die beiden Pfeile angedeutet. An die Turbinen-Generatoreinheit 1 schließt in bekannter Weise ein divergierendes Saugrohr 4 an, das in ein Unterwasser UW mündet. In diesem Beispiel ist der Unterwasserspiegel UW jedoch unterhalb der Oberkante der Saugrohrmündung M, das Saugrohr 4 mündet demzufolge im nicht durchströmten Zustand teilweise ins Freie. Um nun zu verhindern, dass der Austrittsstrahl 7 am Saugrohr 4 abreißt, wie mit der strichlierten Linie angedeutet, was den Wirkungsgrad der Turbinen-Generatoreinheit 1 bekannter Weise erheblich verringern würde, wird im Mündungsbereich des Saugrohres 4 ein Mittel zum Verhindern des Abreißens der Strömung im Saugrohr 4 in Form einer horizontalen Rippe 5 angebracht. Wie in der Seitenansicht ersichtlich, erstreckt sich hier die Rippe 5 über die gesamte Breite des Saugrohres 4. Der Austrittsstrahl 7 tritt dadurch über den gesamten Querschnitt des Saugrohres 4 aus, obwohl der Mündungsbereich des Saugrohres 4 nicht vollständig vom Unterwasser UW bedeckt wird, wie in herkömmlichen Anordnungen erforderlich.

Anstelle eines Saugrohres 4 wie in Fig. 1 gezeigt, das durch eine divergierende Querschnittsänderung gekennzeichnet ist, kann auch ein einfaches Rohr beliebigen Querschnittes verwendet werden. Solche Anordnungen sind hinlänglich bekannt und es ist daher auch bekannt, dass bei solchen Anordnungen von Haus aus mit einem geringerem Wirkungsgrad vorlieb genommen wird. Erfahrungsgemäß erreicht man mit divergierenden Saugrohre hydraulische Wirkungsgrade von >80%, wohingegen mit einfachen Rohren Wirkungsgrade von typischerweise <60% erreichbar sind.

Unter einem Rohr ist im Rahmen dieser Erfindung insbesondere jedes Gebilde einer beliebigen Länge mit einem Hohlraum, dessen Querschnitt und/oder Form gleichbleibend oder veränderlich ist und zumindest eine Eintritts- und eine Austrittsöffnung aufweist, zu verstehen.

Die erfindungsgemäßen Strömungskörper sind selbstverständlich auch für Turbinen mit stromabwärts anschließenden Rohren, wie z.B. Saugrohre, ohne Generatoren gleichermaßen geeignet, z.B. bei Anlagen wo die Turbinen über geeignete Mittel einen örtlich entfernt angeordneten Generator treiben.

Die Fig. 2 zeigt nun dieselbe Turbinen-Generatoreinheit 1 mit Saugrohr 4 wie in Fig. 1. Allerdings spritzt der Austrittsstrahl 7 in diesem Beispiel vollkommen ins Freie, der Unterwasserspiegel UW befindet sich also in der Betriebsposition unterhalb der Unterkante der Saugrohrmündung M, im Extremfall wäre überhaupt kein Flüssigkeitspegel stromab der Turbine bzw. des Rohres vorhanden. Um wiederum das Abreißen der Strömung mit allen seinen negativen Auswirkungen zu verhindern, sind bei diesem Ausführungsbeispiel zwei übereinander angeordnete horizontale Rippen 5 als Strömungskörper vorgesehen, die sich nun jedoch nicht über die gesamte Breite des Saugrohres 4 erstrecken. Die Rippen 5 können z.B. so angeordnet werden, dass die Beziehung

$$v \geq \sqrt{g \cdot h}$$

, mit v der Strömungsgeschwindigkeit, g der Erdbeschleunigung und h dem Abstand zwischen den zwei Rippen, erfüllt wird. Außerdem ist eine der Rippen 5 hier zusätzlich teilweise noch gegenüber der durch das Saugrohr 4 fließenden Strömung geneigt angeordnet, was die Wirkung der Rippen 5 ebenfalls verbessert.

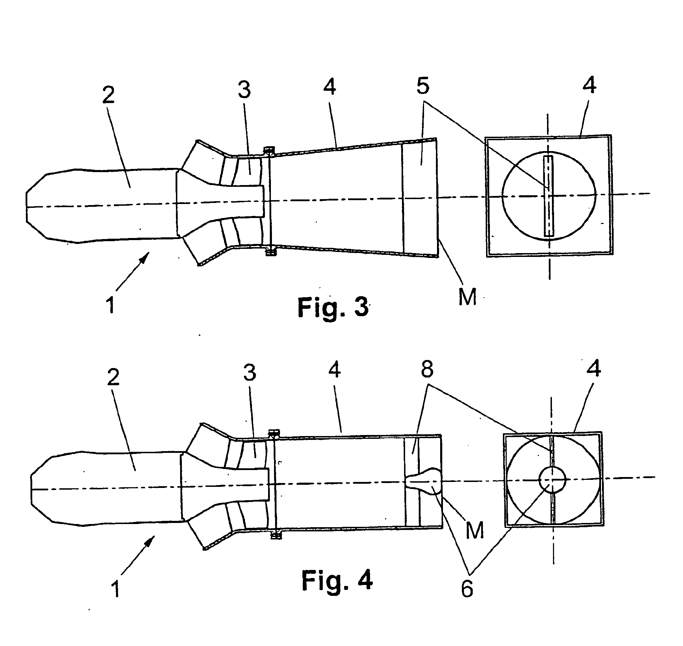

Aus der Fig. 3 kann ein weiteres Ausführungsbeispiel einer Turbinen-Generatoreinheit 1 entnommen werden, wobei hier das Saugrohr 4 von einem runden Querschnitt im Turbinenbereich in eine rechteckige, oder wie hier eine quadratische, Saugrohrmündung M übergeht, was in der Praxis auch meistens der Fall ist. Die Rippe 5 ist bei diesem Beispiel vertikal angeordnet.

Die Rippen 5 können natürlich beliebig angeordnet werden und können natürlich auch eine beliebige Form, z.B. eine Tragflügelform oder eine einfache quaderförmige Form, aufweisen, solange die erwünschte Wirkung, nämlich das Verhindern des Abreißens der Strömung im Saugrohr, damit erzielt wird. Selbstverständlich sind somit auch um die Längsachse der Turbinen-Generatoreinheit 1 um einen beliebigen Winkel verdreht angeordnete Rippen 5, wie z.B. diagonal angeordnete Rippen 5, oder eine beliebige Mischung von horizontalen, vertikalen und verdrehten Rippen 5 möglich, die natürlich auch eine beliebige Länge aufweisen können, sich teilweise oder über die gesamte Breite des Saugrohres 4 erstrecken können und bei Bedarf, wie in Fig. 2, auch schräg gestellt werden können.

Fig. 4 zeigt nun noch eine weitere Möglichkeit, wie das Abreißen der Strömung im Saugrohr 4 verhindert werden kann. Die Divergenz des Saugrohres 4 der Turbinen-Generatoreinheit 1 wird bei diesem Beispiel lediglich durch die Querschnittsänderung über die Länge des Saugrohres 4 erzielt. Der runde Querschnitt im Turbinenbereich geht hier in einen quadratischen Querschnitt an der Saugrohrmündung M über, wobei die Seitenlänge des Quadrates dem Durchmesser des Saugrohres 4 im Turbinenbereich entspricht, was die kompakteste Anordnung einer Turbinen-Generatoreinheit 1 mit Saugrohr 4 entspricht.

Als Strömungskörper ist hier ein konzentrisch angeordneter, birnenförmiger Körper 6 im Mündungsbereich des Saugrohres 4 vorgesehen, der von zwei Stützschaufeln 8 im Saugrohr gehalten wird. Die Stützschaufeln 8 könnten allerdings auch als Rippen 5 gemäß den Ausführungen zu den Fig. 1 bis 3 ausgebildet sein und damit gleichzeitig auch als zusätzlicher Strömungskörper fungieren.

Die erforderliche axiale Erstreckung der Strömungskörper hängt dabei im Wesentlichen von der Divergenz bzw. von der Länge des Rohres, von der Fließgeschwindigkeit des flüssigen Mediums und von der Höhe des Unterwasserspiegels UW bzw. der Pegeldifferenz zwischen Oberwasser und Unterwasser UW ab und kann den speziellen Bedingungen angepasst werden. Allerdings haben praktische Versuche gezeigt, dass Strömungskörper im Mündungsbereich, also ungefähr im letzten Drittel des Rohres, ausreichend sind.

Es ist einsichtlich, dass nicht alle möglichen Ausführungsformen und Kombinationen von geeigneten Strömungskörper im Mündungsbereich des Rohres angeführt werden können. Wesentlich für die Erfindung ist, wie aus der Beschreibung hervorgeht, die Wirkung dieser Strömungskörper und nicht deren genaue Gestaltung. Insbesondere umfasst diese Anmeldung alle möglichen Ausführungsformen von solchen Strömungskörpern.

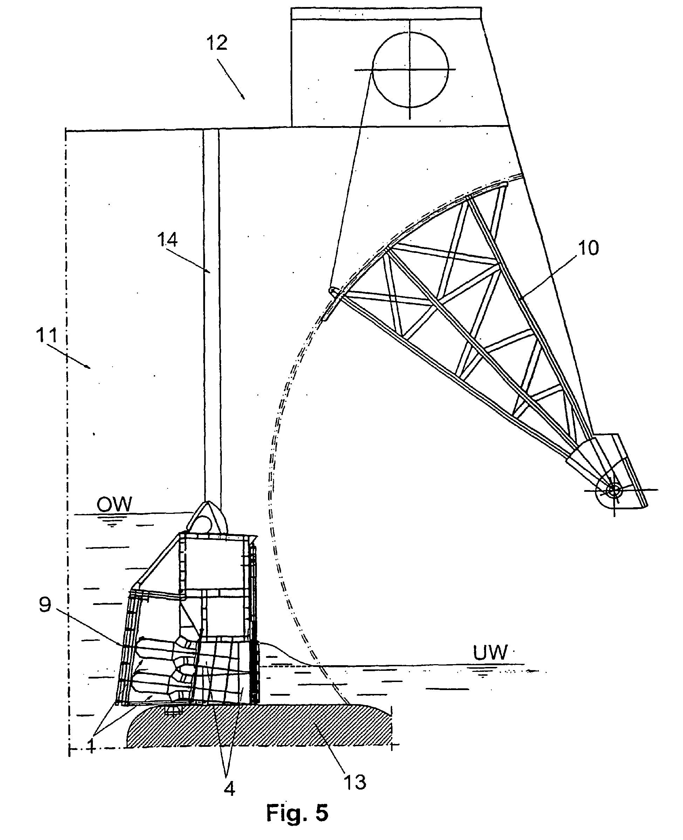

Die Fig. 5 zeigt nun einen Ausschnitt einer Stauanlage 12 mit einer Anzahl von ortsfesten Strukturen, hier Pfeiler 11, zwischen denen ein Turbinen-Generatormodul 9, bestehend aus einer Anzahl von neben- und/oder übereinander angeordneten Turbinen-Generatoreinheiten 1 mit gegenüber der Horizontalen leicht geneigten Längsachsen, angeordnet ist.

Ein solcher Turbinen-Generatormodul 9 kann auch heb- und senkbar angeordnet sein, wobei dann zum Heben bzw. Senken eine nicht dargestellte geeignete Hebeeinrichtung, z.B. ein Kran, vorgesehen sein kann und der Turbinen-Generatormodul 9 in einer nur angedeuteten Führung 14 geführt sein kann. Die hier gezeigte Stauanlage 12 weist darüber hinaus noch einen drehbar gelagerten Wehrverschluss 10 auf, der bei Bedarf, z.B. in Fällen in denen der Turbinen-Generatormodul 9 gehoben wird, geschlossen werden kann.

Die Stauanlage 12 wird in der Regel zur Erhaltung eines gewissen Oberwasserspiegels OW genutzt, wobei sich der Unterwasserspiegel UW entweder von selbst ergibt oder ebenfalls regelbar sein kann.

In dem in Fig. 5 gezeigten Beispiel ist die Wehrkrone 13 der Stauanlage 12 so hoch, dass die Saugrohre 4 der oberen Reihe der Turbinen-Generatoreinheiten 1 in ihrer Betriebsposition teilweise ins Freie spritzen, in diesem Beispiel münden die Rohre der oberen Reihe der Turbinen-Generatoreinheiten 1 nicht vollständig in das Unterwasser UW, wie mit der strichlierten Linie angedeutet. Diese Turbinen-Generatoreinheiten 1 können unter Verwendung eines Strömungskörpers wie in den Fig. 1 bis 4 beschrieben, nun auch bei solchen Stauanlagen 12 verwendet werden, was bisher nur unter zum Teil sehr großen Wirkungsgradeinbußen möglich gewesen wäre.

Der Turbinen-Generatormodul 9 kann weiters hier nicht dargestellte Verschließeinrichtungen umfassen, mit denen einzelne und/oder alle Turbinen-Generatoreinheiten 1 gegen das Durchströmen der Flüssigkeit durch die Turbinen-Generatoreinheiten 1 verschlossen werden können. Dies könnte z.B. der Fall sein, wenn der Oberwasserpegel OW zu niedrig wird und die Staufunktion der Stauanlage nicht mehr gewährleistet werden kann, der Turbinen-Generatormodul 9 zur Wartung oder im Falle eines Hochwasser aus der Wasserweg gehoben wird oder zur Regelung der Durchflussmenge.

Insbesondere bei bereits bestehenden Stauanlagen 12, die bisher nur zur Erhaltung eines vorgegebenen Flüssigkeitspegels dienen und nun auch zur Erzeugung von elektrischer Energie verwendet werden sollen, kann eines solche Situation, in der ein sehr niedriger bzw. überhaupt kein Unterwasserpegel UW vorhanden ist, vorkommen. Solche Stauanlagen 12 konnten bis jetzt nicht oder nur mit erheblichem Aufwand zu Anlagen zur Erzeugung von elektrischer Energie umgebaut werden, da herkömmliche Rohre, wie z.B. Saugrohre 4, die ganz oder teilweise ins Freie spritzen einen beträchtlichen Wirkungsgradveriust bedeuten würden, was die Anlage wiederum unwirtschaftlich machen würde. Durch die Verwendung der erfindungsgemäßen Strömungskörper können nun auch erstmals solche bereits bestehende Stauanlagen 12 mit vertretbarem Aufwand zu Anlagen zur Erzeugung von elektrischer Energie umgebaut werden.

Dazu werden beispielsweise zwischen zwei Pfeiler 11 vorhandene Verschlussorgane gegen ein Turbinen-Generatormodul 9, wie z.B. in Fig. 5 dargestellt, ausgetauscht. Das Turbinen-Generatormodul 9 kann dabei den vorgegebenen Pegeln und den bestehenden Strukturen der Stauanlage 12 angepasst werden, sodass ein optimaler Wirkungsgrad erzielbar ist. Die Saugrohre 4 der Turbinen-Generatoreinheiten 1 die zumindest teilweise ins Freie münden werden dabei mit erfindungsgemäßen Strömungskörper ausgestattet, sodass die Strömung im Mündungsbereich der Saugrohre 4 nicht abreißt und der volle Wirkungsgrad ausgeschöpft werden kann.

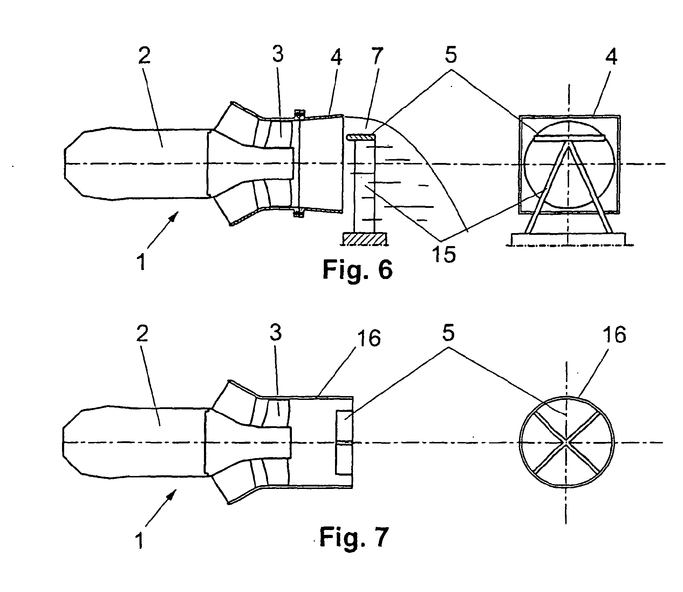

Die Fig. 6 zeigt noch ein weiteres mögliches Ausführungsbeispiel einer Turbinen-Generatoreinheit 1 mit einem Generator 2 und einer Turbine 3, an die ein kurzes Saugrohr 4 anschließt. Unmittelbar in Strömungsrichtung hinter dem Saugrohr 4 ist hier ein Mittel zum Verhindern des Abreißen der Strömung im Saugrohr 4 angeordnet. In diesem speziellen Beispiel besteht dieses Mittel aus einer horizontalen Rippe 5, die von einer Stützkonstruktion 15 in der Strömung des Austrittsstrahles 7 gehalten wird. Dieses Beispiels zeigt insbesondere, dass das Mittel nicht zwingender Weise im Saugrohr4 bzw. Rohr angebracht sein muss, sondern sich auch außerhalb davon befinden kann.

In den Beispielen der Fig. 1 bis 6 sind das Turbinengehäuse in dem die Turbine 3 läuft und das an die Turbine 3 anschließende Rohr separate Bauteile, die, wie in den Fig. 1 bis 6 angedeutet, z.B. über eine Flanschverbindung miteinander verbunden sind. Der Fig. 7 kann nun entnommen werden, dass das Rohr nicht unbedingt eine eigenständiger Bauteil sein muss, sondern es kann auch das Turbinengehäuse 16 am stromabwärts befindlichen Ende rohrförmig erweitert werden, natürlich auch in Form eines Saugrohres, womit es die gleiche Funktion erfüllt, wie ein separates, angeschlossenes Rohr. In dieser rohrförmigen Erweiterung des Turbinengehäuses kann dann natürlich wie oben beschrieben ein Mittel zum Verhindern des Abreißen der Strömung in der rohrförmigen Erweiterung angeordnet sein, wie hier z.B. zwei gegenüber der Vertikalen bzw. der Horizontalen verdrehte Rippen 5.

Auch wenn in den Ausführungsbeispielen nur Varianten mit divergierenden Rohren, oder Rohren mit gleichbleibenden Querschnitt gezeigt werden, so sind aber natürlich auch andere Rohre, wie beispielsweise ein konvergierendes Rohr (=Rohr mit abnehmenden Querschnitt), oder ein abwechselnd divergentes, konvergentes oder gleichbleibendes Rohr denkbar.

**Patentansprüche**

1. Turbine mit einem stromabwärts an die Turbine (3) anschließenden Rohr, **dadurch gekennzeichnet, dass** für einen Betrieb mit niedrigem oder keinem Flüssigkeitspegel stromab der Turbine (3) ein Mittel (5) vorgesehen ist, mit weichem ein Abreißen der Strömung vom Rohr (4) durch Anordnen des Mittels (5) in der Strömung im Mündungsbereich des Rohres (4) zumindest teilweise verhinderbar ist.

2. Turbine nach Anspruch 1, **dadurch gekennzeichnet, dass** das Rohr (4) ein Saugrohr ist.

3. Turbine nach Anspruch 1 oder 2, **dadurch gekennzeichnet, dass** die Turbine (3) eine im wesentlichen horizontale oder eine gegenüber dieser Horizontalen geneigte Rotationsachse aufweist.

4. Turbine nach einem der Ansprüche 1 bis 3, **dadurch gekennzeichnet, dass** die Turbine (3) einen Turbinenläufer aufweist, auf dem eine Mehrzahl von Turbinenschaufein angeordnet sind, die am Turbinenläufer starr angeordnet sind.

5. Turbine nach einem der Ansprüche 1 bis 4, **dadurch gekennzeichnet, dass** das Mittel (5) zum Verhindem des Abreißens der Flüssigkeitsströmung ein Strömungskörper ist.

6. Turbine nach Anspruch 5, **dadurch gekennzeichnet, dass** der Strömungskörper im Rohr (4), vorzugsweise im Bereich des stromabwärtsliegenden Endes des Rohres (4), angeordnet ist.

7. Turbine nach Anspruch 5 oder 6, **dadurch gekennzeichnet, dass** der Strömungskörper als zumindest eine Rippe ausgebildet ist.

8. Turbine nach Anspruch 5, 6 oder 7, **dadurch gekennzeichnet, dass** zumindest ein Strömungskörper im Wesentlichen horizontal angeordnet ist.

9. Turbine nach einem der Ansprüche 5 bis 8, **dadurch gekennzeichnet, dass** zumindest ein Strömungskörper im Wesentlichen vertikal angeordnet ist.

10. Turbine nach einem der Ansprüche 5 bis 9, **dadurch gekennzeichnet, dass** zumindest ein strömungskörper im Wesentlichen gegenüber der Horizontalen bzw. Vertikalen geneigt angeordnet ist.

11. Turbine nach einem der Ansprüche 7 bis 10, **dadurch gekennzeichnet, dass** der Abstand zwischen zwei Rippen im Wesentlichen nach der Formel $v \geq \sqrt{g \cdot h}$, mit v der Strömungsgeschwindigkeit, g der Erdbeschleunigung und h dem Abstand zwischen zwei Rippen, berechenbar ist.

12. Turbine nach einem der Ansprüche 7 bis 11, **dadurch gekennzeichnet, dass** zumindest eine Rippe gegenüber der Strömung geneigt angeordnet ist.

13. Turbine nach Anspruch 5 oder 6, **dadurch gekennzeichnet, dass** der Strömungskörper als zumindest ein im Rohr (4) konzentrisch angeordneter, birnenförmiger Körper (6) ausgebildet ist.

14. Turbine nach Anspruch 13, **dadurch gekennzeichnet, dass** der birnenförmige Körper durch eine Anzahl von Stützschaufeln im Rohr (4) haltbar ist.

15. Turbine nach einem der Ansprüche 1 bis 14, **dadurch gekennzeichnet, dass** das Rohr zumindest teilweise ins Freie mündet.

16. Turbine nach einem der Ansprüche 1 bis 15, **dadurch gekennzeichnet, dass** das Rohr (4) im nicht durchströmten Zustand in seiner Betriebsposition bezogen auf den Unterwasserpegel (UW) zumindest zu 25% seiner Austritts-Querschnittsfläche ins Freie ragt.

17. Turbine nach einem der Ansprüche 1 bis 15, **dadurch gekennzeichnet, dass** das Rohr (4) im nicht durchströmten Zustand in seiner Betriebsposition bezogen auf den Unterwasserpegel (UW) zumindest zu 50% seiner Austritts-Querschnittsfläche ins Freie ragt.

18. Turbine nach einem der Ansprüche 1 bis 15, **dadurch gekennzeichnet, dass** das Rohr (4) im nicht durchströmten Zustand in seiner Betriebsposition bezogen auf den Unterwasserpegel (UW) zumindest zu 75% seiner Austritts-Querschnittsfläche ins Freie ragt.

19. Turbine nach einem der Ansprüche 1 bis 15, **dadurch gekennzeichnet, dass** der Austritt des Rohrs (4) im nicht durchströmten Zustand in seiner Betriebsposition bezogen auf den Unterwasserpegel (UW) zur Gänze ins Freie ragt.

20. Turbinen-Generatoreinheit für einen Betrieb mit niedrigem oder keinem Flüssigkeitspegel (UW) stromab der Turbinen-Generatoreinheit (1), bestehend aus einer Turbine (3) nach einem der Ansprüche 1 bis 19 und einem Generator (2), der von der Turbine (3) angetrieben wird.

21. Turbinen-Generatormodul, bestehend aus einer Anzahl von nebeneinander und/oder übereinander angeordneten, miteinander zu einem oder mehreren Modulen verbundenen Turbinen-Generatoreinheiten (1), von welchen zumindest ein Modul (9) für einen Betrieb mit niedrigem oder keinem Flüssigkeitspegel (UW) stromab des Moduls (9) Turbinen (3) nach einem der Ansprüche 1 bis 19 aufweist.

22. Turbinen-Generatormodul nach Anspruch 21, **dadurch gekennzeichnet, dass** die Rohre (4) der in einer Reihe nebeneinander angeordneten Turbinen-Generatoreinheiten (1) im nicht durchströmten Zustand in ihrer Betriebsposition bezogen auf den Unterwasserpegel (UW) zumindest teilweise ins Freie münden und das Mittel (5) zum Verhindern des Abreißens der Strömung an allen Rohren (4) dieser Reihe wirkt.

23. Turbinen-Generatormodul nach Anspruch 21 oder 22, **dadurch gekennzeichnet, dass** zumindest teilweise ein Rohr (4) einer Anzahl von Turbinen-Generatoreinheiten (1) zugeordnet ist.

24. Turbinen-Generatormodul nach Anspruch 21, 22 oder 23, **dadurch gekennzeichnet, dass** eine Verschließeinrichtung (10) vorgesehen ist, mit dem zumindest eine Turbinen-Generatoreinheit (1) gegen das Durchströmen der Flüssigkeit verschließbar ist.

25. Verwendung einer Turbine mit einem Rohr gemäß einem der Ansprüche 1 bis 19 bzw. einer Turbinen-Generatoreinheit nach Anspruch 20 bzw. eines Turbinen-Generatormoduls nach einem der Ansprüche 21 bis 24 zur Erzeugung elektrischer Energie in einer Stauanlage (12), beispielsweise eine Wehranlage oder eine Schleuse, mit niedrigem oder fehlendem Unterwasserpegel (UW).

26. Verwendung nach Anspruch 25 in einer zumindest teilweise bereits bestehenden Stauanlage (12) mit niedrigem oder fehlendem Unterwasserpegel.

27. Verwendung nach Anspruch 25 oder 26, **dadurch gekennzeichnet, dass** eine Anzahl von Turbinen-Generatoreinheiten (1) zu einem Turbinen-Generatormodul (9) mit mehreren neben- und/oder übereinander angeordneten Turbinen-Generatoreinheiten (1) zusammengefasst sind und der Turbinen-Generatormodul (9) zur Erzeugung von elektrischer Energie zwischen zwei ortsfesten Strukturen (11) der Stauanlage (12) betrieben wird.

28. Verwendung nach Anspruch 27, **dadurch gekennzeichnet, dass** der Turbinen-Generatormodul (9) zwischen den ortsfesten Strukturen (11) mittels einer Hebeeinrichtung heb- und senkbar angeordnet ist.

29. Verfahren zum Betreiben einer mit Flüssigkeit durchströmbaren Turbine mit einem stromab an die Turbine anschließenden Rohr (4) bei niedrigem oder fehlendem Flüssigkeitspegel (UW) stromab der Turbine (3), wobei die Strömung der Flüssigkeit stromabwärts unmittelbar hinter dem Rohr (4) zumindest abschnittsweise über dem Unterwasserpegel (UW) aufrechterhalten wird, indem ein Abreißen der Strömung vom Rohr zumindest teilweise verhindert wird, indem stromab der Turbine (3) ein Mittel (5) in der Strömung im Mündungsbereich des Rohres (4) angeordnet wird, sodass der zur Energieerzeugung erforderliche hydraulische Wirkungsgrad der Turbine (3) erzielt wird.

30. Verfahren nach Anspruch 29, **dadurch gekennzeichnet, dass** die Strömung unmittelbar hinter dem Rohr (4) um zumindest 10% über dem Unterwasserpegel aufrechterhalten wird.

31. Verfahren nach Anspruch 29, **dadurch gekennzeichnet, dass** die Strömung unmittelbar hinter dem Rohr (4) um zumindest 50% über dem Unterwasserpegel aufrechterhalten wird.

32. Verfahren nach Anspruch 29, **dadurch gekennzeichnet, dass** die Strömung unmittelbar hinter dem Rohr (4) um zumindest 100% über dem Unterwasserpegel aufrechterhalten wird.

33. Verfahren nach Anspruch 29, **dadurch gekennzeichnet, dass** die Strömung unmittelbar hinter dem Rohr (4) um zumindest 300% über dem Unterwasserpegel aufrechterhalten wird.

34. Verfahren nach Anspruch 29, **dadurch gekennzeichnet, dass** die Strömung unmittelbar hinter dem Rohr (4) um mehr als 500% über dem Unterwasserpegel aufrechterhalten wird.

35. Verfahren zum Betreiben einer mit Flüssigkeit durchströmbaren Turbinen-Generatoreinheit, bei welchem die Turbine (3) mit einem Rohr (4) ausgestattet ist, bei welchem der Flüssigkeitspegel (UW) stromab in einem Abstand hinter dem Rohr (4) in dem Bereich von unterhalb der Unterkante des Rohres (4), wobei der Bereich von kein Flüssigkeitspegel bis unmittelbar unterhalb der Unterkante des Rohres (4) möglich ist, bis maximal unmittelbar unterhalb der Oberkante des Rohres (4) gehalten wird und stromab der Turbine (3) ein Mittel (5) in der Strömung im Mündungsbereich des Rohres (4) angeordnet wird, mit dem ein Abreißen der Strömung im Rohr (4) zumindest teilweise verhindert wird.

36. Verfahren zum Betreiben einer Anlage zur Erzeugung elektrischer Energie mit zumindest einer Turbinen-Generatoreinheit (1) bzw. zumindest einem Turbinen-Generatormodul (9), bei welchen zumindest eine Turbine (3) stromab der Turbine (3) mit einem Ronr (4) ausgestattet ist, bei weichem der Flüssigkeitspegel (UW) stromab in einem Abstand hinter dem Rohr (4) in dem Bereich von unterhalb der Unterkante des Rohres (4), wobei der möglich ist, bis maximal unmittelbar unterhalb der Oberkante des Rohres (4) gehalten wird und stromab der Turbine (3) ein Mittel (5) in der Strömung im Mündungsbereich des Rohres (4) angeordnet wird, mit dem ein Abreißen der Strömung im Rohr (4) zumindest teilweise verhindert wird.

37. Verfahren zum Umbau einer Struktur zum Zurückhalten eines flüssigen Mediums in eine Einrichtung zur Erzeugung elektrischer Energie, wobei das Medium hinter der Struktur einen niedrigen oder keinen Flüssigkeitspegel aufweist, mit den folgenden Merkmalen:

a) Ermitteln des Pegels (UW) des Mediums hinter der Struktur,
b) Ermitteln des Pegels (OW) des Mediums vor der Struktur, welcher über dem Pegel (UW) des Mediums hinter der Struktur liegt,
c) Herstellen zumindest eines Turbinen-Generatormoduls (9), bestehend aus einer Anzahl neben- und/oder übereinander angeordneter Turbinen-Generatoreinheiten (1) mit Turbinen (3) mit einem stromabwärts an die Turbine (3) anschließende Rohr (4), wobei die Bauweise und der Wirkungsgrad der Turbinen (3) und/oder Generatoren (2) auf die ermittelten Pegel (UW, OW) abgestimmt sind,
d) Anordnen eines Mittels (5) in der Strömung im Mündungsbereich des Rohres (4) stromab einer Turbine (3), wodurch die Strömung des Mediums stromabwärts unmittelbar hinter dem Rohr (4) über dem Pegel (UW) des Mediums hinter der Struktur zumindest abschnittsweises aufrechterhalten wird und ein Abreißen der Strömung vom Rohr (4) zumindest teilweise verhindert wird, sodass der zur Energieerzeugung erforderliche hydraulische Wirkungsgrad der Turbine (3) erzielt wird.

38. Verfahren zum Erzeugen elektrischer Energie an einer Struktur zum Zurückhalten eines flüssigen Mediums, wobei das Medium hinter der Struktur einen niedrigen oder keinen Flüssigkeitspegel (UW) aufweist, mit den folgenden Merkmalen:

a) Anordnen zumindest eines Turbinen-Generatormoduls (9), bestehend aus einer Anzahl von Turbinen-Generatoreinheiten (1) mit Turbinen (3) mit einem stromabwärts an die Turbine (3) anschließenden Rohr (4) an der Struktur, vorzugsweise zwischen zwei ortsfesten Konstruktionen (11) der Struktur, wobei die Bauweise und der Wirkungsgrad der Turbinen (3) und/oder Generatoren (2) der Turbinen-Generatoreinheiten (1) auf die Pegel abgestimmt sind,
b) Betreiben des Turbinen-Generatormoduls (9) durch Durchströmen der Turbinen (3) mit dem Medium,
c) Anordnen eines Mittels (5) in der Strömung im Mündungsbereich des Rohres (4) stromab einer Turbine (3), wodurch die Strömung des Mediums stromabwärts unmittelbar hinter dem Rohr (4) über dem Pegel (UW) des Mediums hinter der Struktur zumindest abschnittsweises aufrechterhalten wird und ein Abreißen der Strömung vom Rohr (4) zumindest teilweise verhindert wird, sodass der zur Energieerzeugung erforderliche hydraulische Wirkungsgrad der Turbine (3) erzielt wird,
d) Weiterleiten der im Generator (2) erzeugten elektrischen Energie an ein Energieversorgungsnetzwerk.

**Claims**

1. Turbine with a tube that is connected to the turbine (3) downstream, **characterised by** a means (5) being provided downstream of the turbine (3) for operation at low or zero liquid level that can at least partially prevent the flow from becoming detached from the tube (4) by positioning the means (5) in the flow at the outlet area of the tube (4).

2. Turbine according to Claim 1, **characterised by** the tube (4) being a suction tube.

3. Turbine according to Claim 1 or 2, **characterised by** the turbine (3) having an essentially horizontal axis of rotation or an axis of rotation that is inclined with respect to this horizontal.

4. Turbine according to one of Claims 1 to 3, **characterised by** the turbine (3) having a turbine rotor on which a plurality of turbine blades are arranged, where the blades are arranged rigidly on the turbine rotor.

5. Turbine according to one of Claims 1 to 4, **charac-**

**terised by** the means (5) for preventing the liquid flow from becoming detached being a flow element.

6. Turbine according to Claim 5, **characterised by** the flow element being arranged in the tube (4), preferably in the region of the downstream end of the tube (4).

7. Turbine according to Claim 5 or 6, **characterised by** the flow element being designed as at least one rib.

8. Turbine according to Claim 5, 6 or 7, **characterised by** at least one flow element being arranged essentially horizontally.

9. Turbine according to one of Claims 5 to 8, **characterised by** at least one flow element being arranged essentially vertically.

10. Turbine according to one of Claims 5 to 9, **characterised by** at least one flow element being arranged essentially on an incline with respect to the horizontal or the vertical.

11. Turbine according to one of Claims 7 to 10, **characterised by** the distance between two ribs being calculated essentially according to the $v \geq \sqrt{g \cdot h}$, formula where $v$ is the flow speed, $g$ is the acceleration due to gravity, and h is the distance between two ribs.

12. Turbine according to one of Claims 7 to 11, **characterised by** at least one rib being arranged on an incline with respect to the flow.

13. Turbine according to Claim 5 or 6, **characterised by** the flow element being designed as at least one pear-shaped element (6) arranged concentrically in the tube (4).

14. Turbine according to Claim 13, **characterised by** the pear-shaped element being held in the tube (4) by a number of stay vanes.

15. Turbine according to one of Claims 1 to 14, **characterised by** the tube opening at least partially into the open air.

16. Turbine according to one of Claims 1 to 15 **characterised by** the tube (4) in its operating position relative to the tail water level (UW) projecting with at least 25% of its outlet cross-section into the open air when no medium is flowing through it.

17. Turbine according to one of Claims 1 to 15 **charac-**

**terised by** the tube (4) in its operating position relative to the tail water level (UW) projecting with at least 50% of its outlet cross-section into the open air when no medium is flowing through it.

18. Turbine according to one of Claims 1 to 15 **characterised by** the tube (4) in its operating position relative to the tail water level (UW) projecting with at least 75% of its outlet cross-section into the open air when no medium is flowing through it.

19. Turbine according to one of Claims 1 to 15, **characterised by** the tube (4) outlet in its operating position relative to the tail water level (UW) projecting entirely into the open air when no medium is flowing through it.

20. Turbine-generator unit for operation at low or zero liquid level (UW) downstream of the turbine-generator unit (1), consisting of a turbine (3) according to one of Claims 1 to 19 and a generator (2) that is driven by the turbine (3).

21. Turbine-generator module, comprising a number of turbine-generator units (1) arranged beside and/or above one another and connected to one another to form one or several modules, of which at least one module (9) has turbines (3) according to one of Claims 1 to 19 for operation at low or zero liquid level (UW) downstream of the module (9).

22. Turbine-generator module according to Claim 21, **characterised by** the tubes (4) of the turbine-generator units (1) arranged beside one another in a row projecting at least partly into the open air in the operating position relative to the tail water (UW) level when there is no medium flowing through them, and by the means (5) to prevent the flow from becoming detached acting on all tubes (4) in this row.

23. Turbine-generator module according to Claim 21 or 22, **characterised by** at least partly one tube (4) being assigned to a number of turbine-generator units (1).

24. Turbine generator module according to Claim 21, 22, or 23, **characterised by** a closing device (10) being provided, with which at least one turbine-generator unit (1) can be closed off to prevent the liquid from flowing through.

25. Use of a turbine with a tube according to one of Claims 1 to 19 or a turbine-generator unit according to Claim 20 or a turbine-generator module according to one of Claims 21 to 24 to generate electric power in a dam installation (12), for example a weir system or a lock, with low or zero tail water (UW) level.

**26.** Use according to Claim 25 in a dam installation (12) at least already existing in parts, with low or zero tailwater level.

**27.** Use according to Claim 25 or 26, **characterised by** a number of turbine-generator units (1) being combined to form a turbine-generator module (9) with several turbine-generator units (1) arranged beside and/or above one another, and by the turbine-generator module (9) being operated between two stationary structures (11) of the dam installation (12) to generate electric power.

**28.** Use according to Claim 27, **characterised by** the turbine-generator module (9) being arranged such that it can be raised and lowered between the stationary structures (11) by means of a lifting device.

**29.** Process for operating a turbine through which liquid can flow and with a tube (4) connected to the turbine (3) downstream at low or zero tail water (UW) level downstream of the turbine (3), where the liquid flow downstream immediately after the tube (4) is maintained above the tail water (UW) level, at least in sections, by at least partly preventing the flow from becoming detached from the tube, achieved by placing a means (5) in the flow at the outlet area of the tube (4) downstream of the turbine (3) in such a way that the hydraulic efficiency of the turbine (3) required to generate energy can be achieved.

**30.** Process according to Claim 29, **characterised by** the flow immediately after the tube (4) being maintained at a level at least 10% above the tailwater level.

**31.** Process according to Claim 29, **characterised by** the flow immediately after the tube (4) being maintained at a level at least 50% above the tailwater level.

**32.** Process according to Claim 29, **characterised by** the flow immediately after the tube (4) being maintained at a level at least 100% above the tailwater level.

**33.** Process according to Claim 29, **characterised by** the flow immediately after the tube (4) being maintained at a level at least 300% above the tailwater level:

**34.** Process according to Claim 29, **characterised by** the flow immediately after the tube (4) being maintained at a level of more than 500% above the tailwater level.

**35.** Process for operating a turbine-generator unit through which liquid can flow, where the turbine (3) is fitted with a tube (4) in which the downstream liquid level (UW) at a distance from the tube (4) is maintained in the range from below the bottom edge of the tube (4), where the range from zero liquid level to directly below the bottom edge of the tube (4) is possible, up to directly beneath the top edge of the tube (4) as a maximum, and where a means (5) is arranged downstream of the turbine (3) in the flow at the outlet area of the tube (4) with which detachment of the flow in the tube (4) can at least be partly prevented.

**36.** Process for operating a plant to generate electric power with at least one turbine-generator unit (1) or at least one turbine-generator module (9), where at least one turbine (3) is fitted with a tube (4) downstream of the turbine (3), where the downstream liquid level (UW) at a distance from the tube (4) is maintained in the range from below the bottom edge of the tube (4), where the range from zero liquid level to directly below the bottom edge of the tube (4) is possible, up to directly beneath the top edge of the tube (4) as a maximum, and where a means (5) is arranged downstream of the turbine (3) in the flow at the outlet area of the tube (4) with which detachment of the flow in the tube (4) can at least be partly prevented.

**37.** Process for converting a structure for retaining a liquid medium into a device for generating electric power, where the medium behind the structure has a low or zero liquid level, with the following characteristic features:

a) Determining the level (UW) of the medium behind the structure,
b) Determining the level (OW) of the medium in front of the structure, which is higher than the level (UW) of the medium behind the structure,
c) Establishing at least one turbine-generator module (9), comprising a number of turbine-generator units (1) beside and/or above of one another, with turbines (3) that have a tube (4) connected to the turbine (3) downstream, where the model and the efficiency of the turbines (3) and/or generators (2) are attuned to the water levels (UW, OW) determined,
d) Positioning a means (5) in the flow at the outlet area of the tube (4) downstream of a turbine (3), whereby the flow of the medium downstream immediately after the tube (4) is maintained above the level (TW) of the medium behind the structure, at least in some sections, and whereby detachment of the flow from the tube (4) is at least partly prevented so that the hydraulic efficiency of the turbine (3) required to generate energy is achieved.

**38.** Process for generating electric power at a structure for retaining a liquid medium, where the medium behind the structure has a low or zero liquid level (UW), with the following characteristic features:

a) Positioning of at least one turbine-generator module (9), consisting of a number of turbine-generator units (1) containing turbines (3) with a tube (4) connecting to the turbine (3) downstream, at the structure, preferably between two stationary parts (11) of the structure, where the model and efficiency of the turbines (3) and/or generators (2) in the turbine-generator units (1) are attuned to the water levels,
b) Operating the turbine-generator module (9) by causing the medium to flow through the turbines (3),
c) Positioning of a means (5) in the flow in the outlet area of the tube (4) downstream of a turbine (3), whereby the flow of the medium downstream immediately behind the tube (4) is maintained above the level (UW) of the medium behind the structure, at least in sections, and detachment of the flow from the tube (4) is at least partly prevented so that the hydraulic efficiency of the turbine (3) required to generate energy is achieved,
d) Relaying the electric power produced in the generator (2) to a power grid.

**Revendications**

**1.** Turbine ayant un tuyau lié à la turbine (3) en aval de cette dernière, **caractérisée en ce qu'**un moyen (5) est prévu en aval de la turbine (3) pour l'opération à niveau bas ou nul visant à prévenir au moins partiellement la séparation du courant du tuyau (4) en disposant le moyen (5) dans le courant à la zone d'ouverture du tuyau (4).

**2.** Turbine selon la revendication 1, **caractérisée en ce que** le tuyau (4) est un tuyau d'aspiration.

**3.** Turbine selon la revendication 1 ou 2, **caractérisée en ce que** la turbine (3) a un axe de rotation essentiellement horizontal ou incliné par rapport à cette horizontale.

**4.** Turbine selon l'une des revendications 1 à 3, **caractérisée en ce que** la turbine (3) a une roue de turbine sur laquelle est disposée une pluralité d'aubes de turbine, qui sont disposées rigidement sur la roue.

**5.** Turbine selon l'une des revendications 1 à 4, **caractérisée en ce que** le moyen (5) pour prévenir la séparation du courant liquide est un élément hydraulique.

**6.** Turbine selon la revendication 5, **caractérisée en ce que** l'élément hydraulique est disposé dans le tuyau (4), de préférence dans la zone du bout aval du tuyau (4).

**7.** Turbine selon la revendication 5 ou 6, **caractérisée en ce que** l'élément hydraulique est étudié comme au moins une nervure.

**8.** Turbine selon la revendication 5, 6 ou 7, **caractérisée en ce qu'**au moins un élément hydraulique est disposé essentiellement horizontalement.

**9.** Turbine selon l'une des revendications 5 à 8, **caractérisée en ce qu'**au moins un élément hydraulique est disposé essentiellement verticalement.

**10.** Turbine selon l'une des revendications 5 à 9, **caractérisée en ce qu'**au moins un élément hydraulique est disposé essentiellement incliné par rapport à l'horizontale, respectivement la verticale.

**11.** Turbine selon l'une des revendications 7 à 10, **caractérisée en ce que** la distance entre deux nervures peut être calculée essentiellement avec la formule: $v \geq \sqrt{g \cdot h}$, où v est la vitesse de courant, g est l'accélération de la pesanteur et h la distance entre deux nervures.

**12.** Turbine selon l'une des revendications 7 à 11, **caractérisée en ce qu'**au moins une nervure est disposée inclinée par rapport au courant.

**13.** Turbine selon la revendication 5 ou 6, **caractérisée en ce que** l'élément hydraulique est étudié comme au moins un corps en forme de poire (6) disposé concentriquement dans le tuyau (4).

**14.** Turbine selon la revendication 13, **caractérisée en ce que** le corps en forme de poire peut être soutenu dans le tuyau (4) moyennant plusieurs aubes de support.

**15.** Turbine selon l'une des revendications 1 à 14, **caractérisée en ce que** le tuyau s'étend vers l'extérieur au moins partiellement.

**16.** Turbine selon l'une des revendications 1 à 15, **caractérisée en ce que**, par rapport au bief d'aval (UW), au moins 25% de la coupe transversale du tuyau (4) dans sa position d'opération en état sans courant de médium, s'étendent vers l'extérieur.

**17.** Turbine selon l'une des revendications 1 à 15, **caractérisée en ce que**, par rapport au bief d'aval (UW), au moins 50% de la coupe transversale du tuyau (4) dans sa position d'opération en état sans courant de médium, s'étendent vers l'extérieur.

**18.** Turbine selon l'une des revendications 1 à 15, **caractérisée en ce que**, par rapport au bief d'aval (UW), au moins 75% de la coupe transversale du tuyau (4) dans sa position d'opération en état sans courant de médium, s'étendent vers l'extérieur.

**19.** Turbine selon l'une des revendications 1 à 15, **caractérisée en ce que** la totalité de la décharge du tuyau dans sa position d'opération en état sans courant de médium s'étend vers l'extérieur par rapport au bief d'aval (UW).

**20.** Unité turbine-générateur pour opération à niveau bas ou nul en aval (UW) de l'unité turbine-générateur (1), comprenant une turbine (3) selon l'une des revendications 1 à 19 et un générateur (2) entraîné par la turbine (3).

**21.** Module turbine-générateur, comprenant un certain nombre d'unités à turbine-générateur (1) disposées l'une à côté de l'autre et/ou l'une au-dessus de l'autre, liées l'une à l'autre pour former un ou plusieurs modules, dont au moins un module (9) comporte des turbines (3) selon l'une des revendications 1 à 19 pour l'opération à un niveau liquide bas ou nul en aval (UW) du module (9).

**22.** Module turbine-générateur selon la revendication 21, **caractérisé en ce que** les tuyaux (4) des unités à turbine-générateur (1) disposées l'une à côté de l'autre dans une file, en état sans courant dans la position d'opération par rapport au bief d'aval (UW), s'étendent au moins partiellement vers l'extérieur et que le moyen (5) pour prévenir la séparation du courant agit sur tous les tuyaux (4) de cette file.

**23.** Module turbine-générateur selon la revendication 21 ou 22, **caractérisé en ce qu'**un tuyau (4) est affecté à un certain nombre d'unités à turbine-générateur (1) au moins partiellement.

**24.** Module turbine-générateur selon la revendication 21, 22 ou 23, **caractérisé en ce qu'**un dispositif de fermeture (10) est prévue pour fermer au moins une unité à turbine-générateur (1) pour l'obturer contre le courant de liquide.

**25.** Emploi d'une turbine ayant un tuyau selon l'une des revendications 1 à 19 ou d'une unité à turbine-générateur selon la revendication 20 ou d'un module à turbine-générateur selon l'une des revendications 21 à 24, pour la génération d'énergie électrique dans une installation de retenue (12), par exemple, un barrage ou une écluse, à un bief d'aval (UW) bas ou manquant.

**26.** Emploi selon la revendication 25 dans une installation de retenue (12) existante au moins partiellement, à un bief d'aval bas ou manquant.

**27.** Emploi selon la revendication 25 ou 26, **caractérisé en ce qu'**un certain nombre d'unités à turbine-générateur (1) est combiné pour former un module à turbine-générateur (9) comportant plusieurs unités à turbine-générateur (1) disposées l'une à côté de l'autre et/ou l'une au-dessus de l'autre, et le module à turbine-générateur (9) est opéré entre deux structures (11) fixes de l'installation de retenue (12) pour la génération d'énergie électrique.

**28.** Emploi selon la revendication 27, **caractérisé en ce que** le module turbine-générateur (9) est disposé de façon à permettre son relèvement ou abaissement entre les structures (11) fixes moyennant un dispositif de levage.

**29.** Procédé d'opération d'une turbine à travers laquelle un liquide peut couler, un tuyau (4) étant lié à la turbine (3) en aval de cette dernière à un niveau de liquide bas ou manquant en aval de la turbine, le courant de liquide en aval directement après le tuyau (4) étant maintenu, au moins dans certains sections, au-dessus du bief d'aval (UW) en prévenant la séparation du courant du tuyau (4) au moins partiellement, en plaçant un moyen (5) en aval de la turbine (3) dans le courant dans la zone d'ouverture du tuyau (4), de manière à obtenir le rendement hydraulique requis de la turbine (3) pour la génération d'énergie.

**30.** Procédé selon la revendication 29, **caractérisé en ce que** le courant directement après le tuyau (4) est maintenu à au moins 10% au-dessus du bief d'aval.

**31.** Procédé selon la revendication 29, **caractérisé en ce que** le courant directement après le tuyau (4) est maintenu à au moins 50% au-dessus du bief d'aval.

**32.** Procédé selon la revendication 29, **caractérisé en ce que** le courant directement après le tuyau (4) est maintenu à au moins 100% au-dessus du bief d'aval.

**33.** Procédé selon la revendication 29, **caractérisé en ce que** le courant directement après le tuyau (4) est maintenu à au moins 300% au-dessus du bief d'aval.

**34.** Procédé selon la revendication 29, **caractérisé en ce que** le courant directement après le tuyau (4) est maintenu à au moins 500% au-dessus du bief d'aval.

**35.** Procédé d'opération d'une unité à turbine-générateur à travers laquelle un liquide peut couler, où la turbine (3) comporte un tuyau (4) dans lequel le bief aval du liquide (UW) à une certaine distance après le tuyau (4) est maintenue dans la zone d'au-dessous de l'arrête inférieure du tuyau (4), où un régime de niveau de liquide nul jusqu'à directement au-dessous de l'arrête inférieure du tuyau (4) est possible, au maximum jusqu'à directement au-dessous de l'arrête supérieure du tuyau (4), et un moyen (5) est disposé en aval de la turbine (3) dans le courant dans la zone d'ouverture du tuyau (4), avec lequel la séparation du courant dans le tuyau (4) est prévenue au moins partiellement.

36. Procédé d'opération d'une installation de génération d'énergie électrique, comportant au moins une unité à turbine-générateur (1) ou au moins un module à turbine-générateur (9), où au moins une turbine (3) est équipée d'un tuyau (4) en aval de la turbine (3), tuyau dans lequel le bief aval (UW) à une certaine distance du tuyau (4) est maintenu dans le régime d'au-dessous de l'arrête inférieure du tuyau (4), où un régime de niveau de liquide nul jusqu'à directement au-dessous de l'arrête inférieure du tuyau (4) est possible, au maximum jusqu'à directement au-dessous de l'arrête supérieure du tuyau (4), et un moyen (5) est disposé en aval de la turbine (3) dans le courant dans la zone d'ouverture du tuyau (4), avec lequel la séparation du courant dans le tuyau (4) est prévenue au moins partiellement.

37. Procédé de modification d'une structure pour retenir un liquide dans un dispositif de génération d'énergie électrique, le liquide étant à un niveau bas ou nul après la structure, comportant les caractéristiques suivantes :

a) détermination du niveau du liquide (UW) après la structure,
b) détermination du niveau du liquide (OW) devant la structure, ce niveau étant plus haut que le niveau du liquide (UW) en aval de la structure,
c) établissement d'au moins un module à turbine-générateur (9) comprenant un certain nombre d'unités à turbine-générateur (1) disposées l'une à côté de l'autre et/ou l'une au-dessus de l'autre, avec des turbines (3) ayant un tuyau (4) lié à la turbine (3) en aval de cette dernière, la conception et le rendement des turbines (3) et/ou générateurs (2) étant adaptés aux niveaux (UW, OW) calculés.
d) Placement d'un moyen (5) dans le courant dans la zone d'ouverture du tuyau (4) en aval d'une turbine (3), ce qui maintiendra le courant du liquide en aval (UW) directement après le tuyau (4) au-dessus du bief aval (UW) du liquide après la structure au moins en sections, et préviendra la séparation du courant du tuyau (4) au moins partiellement, de manière à obtenir le rendement hydraulique de la turbine (3) nécessaire à la génération d'énergie.

38. Procédé de génération d'énergie électrique dans une structure pour retenir un liquide, le liquide étant à un niveau (UW) bas ou nul après la structure, comportant les caractéristiques suivantes :

a) Placement d'au moins un module à turbine-générateur (9), comprenant un certain nombre d'unités à turbine-générateur (1) avec des turbines (3) ayant un tuyau (4) lié à la turbine (3) en aval de cette dernière, au niveau de la structure, de préférence entre deux constructions fixes (11) de la structure, l'opération et le rendement des turbines (3) et/ou générateurs (2) des unités à turbine-générateur (1) étant harmonisés avec les niveaux,
b) Opération du module à turbine-générateur (9) par le liquide coulant à travers les turbines (3),
c) Placement d'un moyen (5) dans le courant dans la zone d'ouverture du tuyau (4) en aval d'une turbine (3), ce qui maintiendra le courant du liquide en aval directement après le tuyau (4) au-dessus du bief aval (UW) du liquide après la structure au moins en sections, et préviendra la séparation du courant du tuyau (4) au moins partiellement, de manière à obtenir le rendement hydraulique de la turbine (3) nécessaire à la génération d'énergie.
d) Transmission de l'énergie électrique produit par le générateur (2) à un réseau de distribution d'électricité.

EP 1 492 955 B1

**Fig. 1**

**Fig. 2**

14

**Fig. 3**

**Fig. 4**

**Fig. 5**

**Fig. 6**

**Fig. 7**

**EP 1 492 955 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2060101 A